# EUROPEAN PATENT SPECIFICATION

(11) **EP 1 826 960 B1**
(45) Date of publication and mention of the grant of the patent: **20.08.2008**
(21) Application number: 06252583.7
(22) Date of filing: 18.05.2006
(51) Int. Cl.: H04L 12/56

(54) **Cut-through transfer**
Direkte Durchschaltevermittlung
Transfert de données de type 'cut-through'

(30) Priority: 27.02.2006 JP 2006050701
(43) Date of publication of application: 29.08.2007
(73) Proprietor: Fujitsu Ltd., Kawasaki-shi, Kanagawa 211-8588 (JP)
(72) Inventor: Hatamori, Shuei, c/o Fujitsu Limited, Kawasaki-shi Kanagawa 211-8588 (JP); Nagatsuka, Masaaki, c/o Fujitsu Limited, Kawasaki-shi Kanagawa 211-8588 (JP); Takahashi, Takuji, c/o Fujitsu Limited, Kawasaki-shi Kanagawa 211-8588 (JP); Oka, Hiroyuki, c/o Fujitsu Limited, Kawasaki-shi Kanagawa 211-8588 (JP)
(74) Representative: Stebbing, Timothy Charles

(56) References cited:
- EP-A- 1 185 013
- JP-A- 2001 257 680
- US-A- 6 009 108

## Description

The present invention generally relates to a technology for transmitting packets received from one external device to another external device.

One of the conventional packet transmitting and receiving methods used over networks is what is known as a cut-through method which allows received packets to be transmitted quickly. Such a technology is disclosed, for example, in Japanese Patent Laid-Open Publication No. 2001-257680. Precisely, a network device, which employs the cut-through method based on a direct memory access (DMA), allows other network devices to have a direct memory access (DMA) to packets received by the network device even before it receives all the packets of certain data.

However, in the conventional technology, there is a threat of buffer underruns, i.e., packets in the incoming data buffer are exhausted. In other words, if DMA starts before all the packets are accumulated in an incoming data buffer of the network device, and if a receiving rate of the packets at the incoming data buffer is slower than a transmitting rate from the buffer, at some time point the incoming data buffer becomes empty of packets. Such buffer underrun leads to various serious issues, for example, data garbling due to attempted transmission of non-existent data, etc. Buffer underruns can therefore occur in network devices employing the cut-through method.

Thus, there is a need of a technology that prevents occurrence of underruns on a network device that employs the cut-through method.

US 6009108 discloses a multiplexing system for converting a plurality of variable-length burst data streams supplied from a plurality of data suppliers into a multiplexed averaged-transfer-rate fixed-length packet stream. Within each output period, for each of the input buffers of a multiplexer, a virtual data quantity in the input buffer at the time tₙ is calculated by using the length of each output period and average supply rates at time tₙ₋₁ which are also supplied from the data suppliers.

It is desirable to mitigate or solve the problems in the conventional technology.

According to an aspect of the present invention, a data transmitting and receiving apparatus for accumulating packets received from a first device and transmitting accumulated packets to a second device without waiting to receive all packets belonging to certain data from the first device, includes a storage unit for accumulating therein payloads of packets received from the first device; a payload-volume calculating unit for calculating a designated payload volume DSPS based on OSPS=TPx(1-RR/TR) where TP is a total payload volume of a packet received at a certain time point from the first device, RR is a receiving rate of packets, and TR is a transmitting rate of packets; a payload-volume determining unit for determining whether a received payload volume RPS accumulated in the storage unit has reached the designated payload volume DSPS; and a payload transmission control unit for, if the payload volume determining unit determines that the received payload volume RPS has reached the designated payload volume DSPS, controlling a start of transmission of the payload accumulated in the storage unit to the second device.

According to another aspect of the present invention, a data transmitting and receiving method of accumulating packets received from a first device and transmitting accumulated packets to a second device without waiting to receive all packets belonging to certain data from the first device, includes accumulating payloads of packets received from the first device in a storage unit; calculating a designated payload volume DSPS based on DSPS=TPx(1-RR/TR) where TP is a total payload volume of a packet received at a certain time point from the first device, RR is a receiving rate of packets, and TR is a transmitting rate of packets; determining whether a received payload volume RPS accumulated in the storage unit has reached the designated payload volume DSPS; and starting transmission of the payload accumulated in the storage unit to the second device when it is determined that the received payload volume RPS has reached the designated payload volume DSPS.

According to still another aspect of the present invention, a computer-readable recording medium stores therein a computer program that implements the above method on a computer.

The above and other features, advantages and technical and industrial significance of this invention will be better understood by reading the following detailed description of presently preferred embodiments of the invention, when considered in connection with the accompanying drawings, in which:
Fig. 1 is a schematic for explaining an overview of a data transmitting and receiving apparatus according to an embodiment of the present invention;
Fig. 2 is a functional block diagram of a data transmitting and receiving apparatus according to a first concrete example of the embodiment;
Fig. 3 is a drawing for explaining calculation of a DMA-initiation payload volume according to the first concrete example; and
Fig. 4 is a flowchart of a process procedure performed by the data transmitting and receiving apparatus shown in Fig. 2.

Exemplary embodiments of the present invention are explained below with reference to the accompanying drawings. The present invention is not limited by those embodiments.

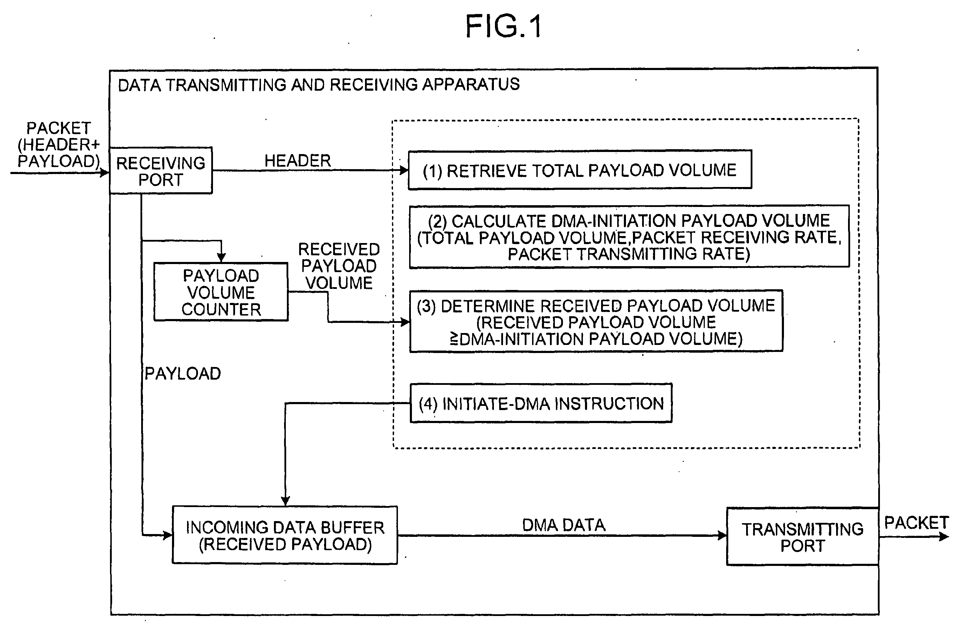

Fig. 1 is a schematic for explaining an overview of a data transmitting and receiving apparatus according to an embodiment of the present invention. The data transmitting and receiving apparatus employs the cut-through method in which incoming packets are accumulated in an incoming data buffer and the accumulated packets are forwarded even before all the packets for certain data have been received. Although the data transmitting and receiving apparatus is based on the cut-through method, it is so configured that no buffer underruns occur.

Precisely, the data transmitting and receiving apparatus measures a received payload volume RPS, from a payload included in a packet being currently received from one device (not shown), with a payload volume counter, sequentially accumulates payloads included in the received packets in an incoming data buffer, and obtains information about a total payload volume TP from a header included in the packet that is being currently received (see (1) of Fig. 1).

Next, the data transmitting and receiving apparatus calculates a DMA-initiation payload volume DSPS based on the total payload volume TP, a transmitting rate RR of a receiving port, and a transmitting rate TR of a transmitting port of the data transmitting and receiving apparatus (see (2) of Fig. 1). The data transmitting and receiving apparatus calculates the DMA-initiation payload volume DSPS, for example, based on DSPS=TPx(1-RR/TR).

Subsequently, the data transmitting and receiving apparatus determines whether the received payload volume RPS has reached the calculated DMA-initiation payload volume DSPS (see (3) of Fig. 1). If it is determined that RPS has reached DSPS, the data transmitting and receiving apparatus outputs an initiate-DMA instruction to the incoming data buffer. Upon receiving the initiate-DMA instruction, the incoming data buffer outputs the accumulated payload as DMA data to the transmitting port. The output DMA data is transmitted via the transmitting port to another device (such as a main memory in a server) as packets (see (4) of Fig. 1).

Thus, the data transmitting and receiving apparatus according to the embodiment is capable of preventing occurrence of buffer underruns.

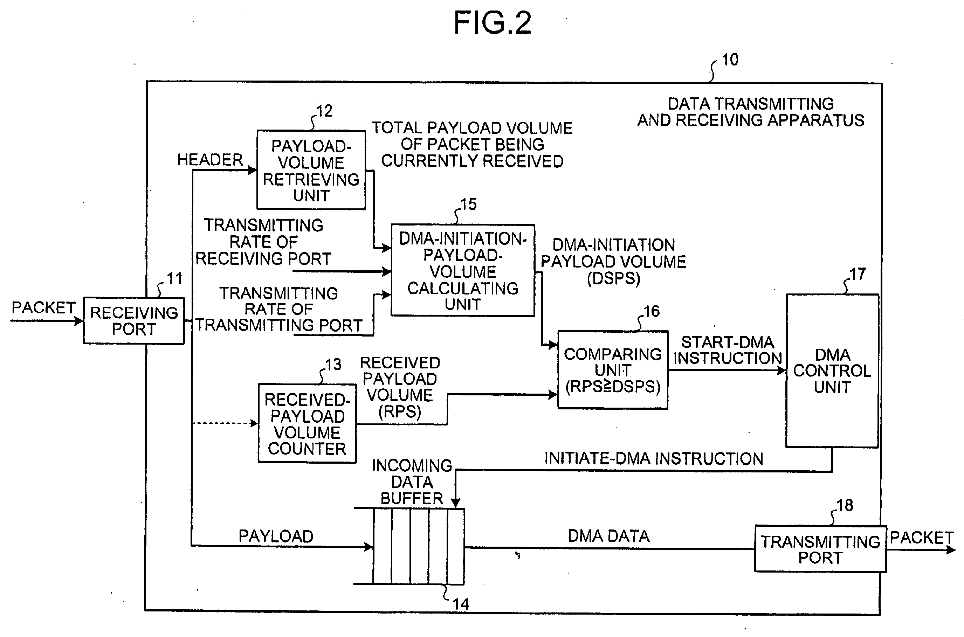

Fig. 2 is a functional block diagram of a data transmitting and receiving apparatus 10 according to a first concrete example of the embodiment. The data transmitting and receiving apparatus 10 includes a receiving port 11, a payload-volume retrieving unit 12, a received-payload volume counter 13, an incoming data buffer 14, a DMA-initiation-payload-volume calculating unit 15, a comparing unit 16, a DMA control unit 17, and a transmitting port 18.

The receiving port 11 receives the packets transmitted by, for example, another network device (not shown). The header of a packet received by the receiving port 11 is output to the payload-volume retrieving unit 12, and the payload of the packet is output to the incoming data buffer 14.

The payload-volume retrieving unit 12 refers to the header and retrieves information about the total payload volume TP included in the packet to which the header belonged. The payload-volume retrieving unit 12 outputs the retrieved total payload volume TP to the DMA-initiation-payload-volume calculating unit 15.

The received-payload volume counter 13 measures the volume of the payload of the packet to which the payload belonged. Specifically, the received-payload volume counter 13 measures received payload volume RPS of the payload, i.e., payload accumulated in the incoming data buffer 14, and outputs the calculated received payload volume RPS to the comparing unit 16.

The incoming data buffer 14 accumulates the payloads, and upon receiving an initiate-DMA instruction from the DMA control unit 17, starts outputting the accumulated payload as DMA data to the transmitting port 18.

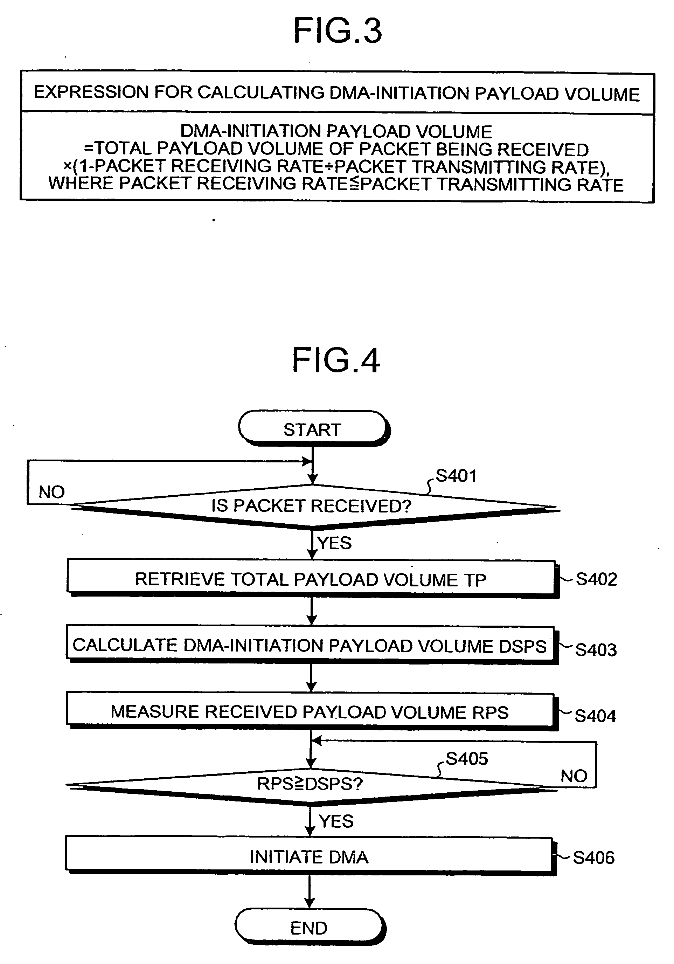

The DMA-initiation-payload-volume calculating unit 15 calculates the payload volume required for initiating DMA. Specifically, if the total payload volume is TP, a transmitting rate of the receiving port 11 is RR, a transmitting rate of the transmitting port 18 is TR, then the DMA-initiation-payload-volume calculating unit 15 calculates a DMA-initiation payload volume DSPS as DSPS=TPx(1-RR/TR), where RR ≤ TR (see Fig. 3). The DMA-initiation-payload-volume calculating unit 15 outputs the calculated DMA-initiation payload volume to the comparing unit 16. The transmitting rate RR of the receiving port 11 and transmitting rate of the transmitting port TR are set when the data transmitting and receiving apparatus 10 is started up or reset, and once set they do not change.

The comparing unit 16 performs a determination process on the received payload volume RPS. Specifically, the comparing unit 16 determines whether the received payload volume RPS has reached the DMA-initiation payload volume DSPS. If it is determined that RPS≥DSPS, the comparing unit 16 outputs a start-DMA instruction to the DMA control unit 17. If it is determined that RPS≥DSPS is not true, the comparing unit 16 repeatedly performs the determination process until RPS≥DSPS.

The DMA control unit 17 controls DMA initiation. Specifically, upon receiving the start-DMA instruction, the DMA control unit 17 outputs an initiate-DMA instruction to the incoming data buffer 14. The transmitting port 18 transmits packets to another network device (not shown). Specifically, upon receiving the initiate-DMA instruction from the DMA control unit 17, the transmitting port 18 transmits the DMA data as packets to another network device.

Fig. 4 is a flowchart of a process procedure performed by the data transmitting and receiving apparatus 10. When a packet is received at the receiving port 11 ("Yes" at step S401), the payload-volume retrieving unit 12 refers to a header of the packet and retrieves information about a total payload volume TP included in the packet (step S402). Next, the DMA-initiation-payload-volume calculating unit 15 calculates a DMA-initiation payload volume DSPS (step S403). Specifically, the DMA-initiation-payload-volume calculating unit 15 calculates the DMA-initiation payload volume DSPS as DSPS=TPx(1-RR/TR), where RR is a transmitting rate of the receiving port 11 and TR is a transmitting rate of the transmitting port 18.

Next, the received-payload volume counter 13 measures the received payload volume RPS of the payload, i.e., payload accumulated in the incoming data buffer 14 (step S404). Subsequently, the comparing unit 16 determines whether RPS≥DSPS (step S405). If it is determined that RPS≥DSPS ("Yes" at step S405), the comparing unit 16 outputs a start-DMA instruction to the DMA control unit 17, and upon receiving the start-DMA instruction, the DMA control unit 17 outputs an initiate-DMA instruction to the incoming data buffer 14 to initiate the DMA (step S406). If it is determined that RPS≥DSPS is not true ("No" at step S405), the comparing unit 16 repeats the determination process on the received payload volume until it reaches the DMA-initiation payload volume.

According to the first concrete example, in the data transmitting and receiving apparatus, it is possible to prevent occurrence of buffer underruns.

All the automatic processes explained in the embodiment can be, entirely or in part, carried out manually. Similarly, all the manual processes explained in the present embodiment can be entirely or in part carried out automatically by a known method. The process procedures, the control procedures, specific names, and data, including various parameters, can be changed as required unless otherwise specified.

The constituent elements of the data transmitting and receiving apparatus 10 are merely conceptual and may not necessarily physically resemble the structures shown in the drawings. For example, the data transmitting and receiving apparatus 10 need not necessarily have the structure that is illustrated. That is, some or all of the elements can be broken down or integrated either functionally or physically in accordance with the load or how the apparatus is to be used. Further, the process functions can either entirely or in part be performed by a computer program executable by a central processing unit (CPU) (not shown) or by hardware (not shown) using wired logic.

The process procedure performed by the data transmitting and receiving apparatus 10 can be realized on a computer by executing a computer program on the computer. The computer can be a personal computer or a workstation. For example, the computer program can be loaded onto a designated register (for example, a register responsible for DMA initiation) in the data transmitting and receiving apparatus 10 and executed to realize the process procedure. The computer program can be distributed over a network such as the Internet. The computer program can be recorded on a computer-readable recording medium such as a hard disk, flexible disk (FD), compact disk-Read-Only memory (CD-ROM), magneto optic (MO) disk, digital versatile disk (DVD), etc. and can be executed by the computer by loading the program from the recording medium.

According to an aspect of the present invention it becomes possible to prevent occurrence of underruns in a network device that employs the cut-through method.

Although the invention has been described with respect to a specific embodiment for a complete and clear disclosure, the invention is not to be thus limited but is to be construed as embodying all modifications and alternative constructions that fall within the scope of the appended claims.

## Claims

1. A data transmitting and receiving apparatus (10) for accumulating packets received from a first device and transmitting accumulated packets to a second device before all packets belonging to certain data have been received from the first device, the data transmitting and receiving apparatus (10) comprising:
a storage unit (14) for accumulating therein payloads of packets received from the first device; **characterised by** further comprising
a payload-volume calculating unit (15) for calculating a designated payload volume DSPS based on DSPS=TPx(1-RR/TR) where TP is a total payload volume of a packet received at a certain time point from the first device, RR is a receiving rate of packets, and TR is a transmitting rate of packets;
a payload-volume determining unit (16) for determining whether a received payload volume RPS accumulated in the storage unit has reached the designated payload volume DSPS; and
a payload transmission control unit (17) for, if the payload volume determining unit (16) determines that the received payload volume RPS has reached the designated payload volume DSPS, providing a control to start transmission of the payload accumulated in the storage unit (14) to the second device.

2. The data transmitting and receiving apparatus (10) according to claim 1, further comprising a receiving port (11) for receiving packets from the first device.

3. The data transmitting and receiving apparatus (10) according to claim 2, wherein the receiving rate RR of packets is a transmitting rate of the receiving port (11).

4. The data transmitting and receiving apparatus (10) according to any preceding claim, further comprising a transmitting port (18) for transmitting payloads accumulated in the storage unit (14) to the second device as packets.

5. The data transmitting and receiving apparatus (10) according to claim 4, wherein the transmitting rate TR of packets is a transmitting rate of the transmitting port (18).

6. The data transmitting and receiving apparatus (10) according to any preceding claim, wherein the storage unit (14) is based on direct memory access.

7. The data transmitting and receiving apparatus (10) according to any preceding claim, further comprising a payload-volume retrieving unit (12) for retrieving the total payload volume TP of,a packet from a header of the packet.

8. A data transmitting and receiving method of accumulating packets received from a first device and transmitting accumulated packets to a second device before all packets belonging to certain data have been received from the first device, the data transmitting and receiving method comprising:
accumulating payloads of packets received from the first device in a storage unit (14); **characterised by** further comprising
calculating a designated payload volume DSPS based on DSPS=TPx(1-RR/TR) where TP is a total payload volume of a packet received at a certain time point from the first device, RR is a receiving rate of packets, and TR is a transmitting rate of packets;
determining whether a received payload volume RPS accumulated in the storage unit (14) has reached the designated payload volume DSPS; and
starting transmission of the payload accumulated in the storage unit (14) to the second device when it is determined that the received payload volume RPS has reached the designated payload volume DSPS.

9. The data transmitting and receiving method according to claim 8, wherein the storage unit (14) is based on direct memory access.

10. The data transmitting and receiving method according to claim 8 or 9, further comprising retrieving the total payload volume TP of a packet from a header of the packet.

11. A computer program for accumulating packets received from a first device and transmitting accumulated packets to a second device before all packets belonging to certain data have been received from the first device, the computer program being embodied on a computer-readable recording medium and comprising computer program code means adapted to perform the following steps when said program is run on a computer:
accumulating payloads of packets received from the first device in a storage unit (14); **characterised by** the computer program causing the computer to execute further steps of
calculating a designated payload volume DSPS based on DSPS=TPx(1-RR/TR) where TP is a total payload volume of a packet received at a certain time point from the first device, RR is a receiving rate of packets, and TR is a transmitting rate of packets;
determining whether a received payload volume RPS accumulated in the storage unit (14) has reached the designated payload volume DSPS; and
starting transmission of the payload accumulated in the storage unit (14) to the second device when it is determined that the payload volume RPS has reached the designated payload volume DSPS.

12. The computer program according to claim 11, wherein the storage unit (14) is based on direct memory access.

13. The computer program according to claim 11 or 12, the computer program further causing the computer to execute a step of retrieving the total payload volume TP of a packet from a header of the packet.

## Patentansprüche

1. Datensende- und -empfangsvorrichtung (10) zum Akkumulieren von Paketen, die von einer ersten Anordnung empfangen werden, und Senden von akkumulierten Paketen an eine zweite Anordnung, bevor alle Pakete, die zu gewissen Daten gehören, von der ersten Anordnung empfangen worden sind, welche Datensende- und -empfangsvorrichtung (10) umfasst:
eine Speichereinheit (14), um darin Nutzlasten von Paketen zu akkumulieren, die von der ersten Anordnung empfangen werden; **dadurch gekennzeichnet, dass** sie ferner umfasst:
eine Nutzlastvolumenberechnungseinheit (15) zum Berechnen eines bezeichneten Nutzlastvolumens DSPS auf der Basis von DSPS=TPx(1-RR/TR), wobei TP ein Gesamtnutzlastvolumen eines Paketes ist, das zu einem gewissen Zeitpunkt von der ersten Anordnung empfangen wird, RR eine Empfangsrate von Paketen ist und TR eine Senderate von Paketen ist;
eine Nutzlastvolumenbestimmungseinheit (16) zum Bestimmen, ob ein empfangenes Nutzlastvolumen RPS, das in der Speichereinheit akkumuliert ist, das bezeichnete Nutzlastvolumen DSPS erreicht hat; und
eine Nutzlastsendesteuereinheit (17), um dann, falls die Nutzlastvolumenbestimmungseinheit (16) bestimmt, dass das empfangene Nutzlastvolumen RPS das bezeichnete NutzlastVolumen DSPS erreicht hat, eine Steuerung vorzusehen, um das Senden der in der Speichereinheit (14) akkumulierten Nutzlast an die zweite Anordnung zu starten.

2. Datensende- und -empfangsvorrichtung (10) nach Anspruch 1, ferner mit einem Empfangsport (11) zum Empfangen von Paketen von der ersten Anordnung.

3. Datensende- und -empfangsvorrichtung (10) nach Anspruch 2, bei der die Empfangsrate RR von Paketen eine Senderate des Empfangsports (11) ist.

4. Datensende- und -empfangsvorrichtung (10) nach einem vorhergehenden Anspruch, ferner mit einem Sendeport (18) zum Senden von Nutzlasten, die in der Speichereinheit (14) akkumuliert sind, an die zweite Anordnung als Pakete.

5. Datensende- und -empfangsvorrichtung (10) nach Anspruch 4, bei der die Senderate TR von Paketen eine Senderate des Sendoports (18) ist.

6. Datensende- und -empfangsvorrichtung (10) nach einem vorhergehenden Anspruch, bei der die Speichereinheit (14) auf dem direkten Speicherzugriff basiert.

7. Datensende- und -empfangsvorrichtung (10) nach einem vorhergehenden Anspruch, ferner mit einer Nutzlastvolumenabrufeinheit (12) zum Abrufen des Gesamtnutzlastvolumens TP eines Paketes von einem Header des Paketes.

8. Datensende- und -empfangsverfahren zum Akkumulieren von Paketen, die von einer ersten Anordnung empfangen werden, und Senden von akkumulierten Paketen an eine zweite Anordnung, bevor alle Pakete, die zu gewissen Daten gehören, von der ersten Anordnung empfangen worden sind, welches Datensende- und -empfangsverfahren umfasst:
Akkumulieren von Nutzlasten von Paketen, die von der ersten Anordnung empfangen werden, in einer Speichereinheit (14); **dadurch gekennzeichnet, dass** es ferner umfasst:
Berechnen eines bezeichneten Nutzlastvolumens DSPS auf der Basis von DSPS=TPx(1-RR/TR), wobei TP ein Gesamtnutzlastvolumen eines Paketes ist, das zu einem gewissen Zeitpunkt von der ersten Anordnung empfangen wird, RR eine Empfangsrate von Paketen ist und TR eine Senderate von Paketen ist;
Bestimmen, ob ein empfangenes Nutzlastvolumen RPS, das in der Speichereinheit (14) akkumuliert ist, das bezeichnete Nutzlastvolumen DSPS erreicht hat; und
Starten des Sendens der in der Speichereinheit (14) akkumulierten Nutzlast an die zweite Anordnung, wenn bestimmt wird, dass das empfangene Nutzlastvolumen RPS das bezeichnete Nutzlastvolumen DSPS erreicht hat.

9. Datensende- und -empfangsverfahren nach Anspruch 8, bei dem die Speichereinheit (14) auf dem direkten Speicherzugriff basiert.

10. Datensende- und -empfangsverfahren nach Anspruch 8 oder 9, ferner mit dem Abrufen des Gesamtnutzlastvolumens TP eines Paketes von einem Header des Paketes.

11. Computerprogramm zum Akkumulieren von Paketen, die von einer ersten Anordnung empfangen werden, und Senden von akkumulierten Paketen an eine zweite Anordnung, bevor alle Pakete, die zu gewissen Daten gehören, von der ersten Anordnung empfangen worden sind, welches Computerprogramm auf einem computerlesbaren Aufzeichnungsmedium enthalten ist und ein Computerprogrammcodemittel umfasst, das dafür ausgelegt isL, um die folgenden Schritte auszuführen, wenn das Programm auf einem Computer läuft:
Akkumulieren von Nutzlasten von Paketen, die von der ersten Anordnung empfangen werden, in einer Speichereinheit (14); **dadurch gekennzeichnet, dass** das Computerprogramm bewirkt, dass der Computer die weiteren Schritte ausführt:
Berechnen eines bezeichneten Nutzlastvolumens DSPS auf der Basis von DSPS=TPx(1-RR/TR), wobei TP ein Gesamtnutzlastvolumen eines Paketes ist, das zu einem gewissen Zeitpunkt von der ersten Anordnung empfangen wird, RR eine Empfangsrate von Paketen ist und TR eine Senderate von Paketen ist;
Bestimmen, ob ein empfangenes Nutzlastvolumen RPS, das in der Speichereinheit (14) akkumuliert ist, das bezeichnete Nutzlastvolumen DSPS erreicht hat; und
Starten des Sendens der in der Speichereinheit (14) akkumulierten Nutzlast an die zweite Anordnung, wenn bestimmt wird, dass das Nutzlastvolumen RPS das bezeichnete Nutzlastvolumen DSPS erreicht hat.

12. Computerprogramm nach Anspruch 11, bei dem die Speichereinheit (14) auf dem direkten Speicherzugriff basiert.

13. Computerprogramm nach Anspruch 11 oder 12, welches Programm ferner bewirkt, dass der Computer einen Schritt ausführt zum Abrufen des Gesamtnutzlastvolumens TP eines Paketes von einem Header des Paketes.

## Revendications

1. Appareil de transmission et de réception de données (10) destiné à accumuler des paquets reçus de la part d'un premier dispositif et à transmettre les paquets accumulés à un second dispositif avant que tous les paquets appartenant à certaines données aient été reçus de la part du premier dispositif, l'appareil de transmission et de réception de données (10) comprenant :
une unité de stockage (14) destinée à accumuler à l'intérieur les charges utiles des paquets reçus de la part du premier dispositif; **caractérisé en ce qu'**il comprend en outre
une unité de calcul de volume de charge utile (15) destinée à calculer un volume de charge utile désigné DSPS sur la base de DSPS=TP(1-RR/TR), où TP est un volume de charge utile total d'un paquet reçu à un certain moment de la part du premier dispositif, RR est une vitesse de réception des paquets, et TR est une vitesse de transmission des paquets ;
une unité de détermination de volume de charge utile (16) destinée à déterminer si un volume de charge utile reçu RPS accumulé dans l'unité de stockage a atteint le volume de charge utile désigné DSPS ; et
une unité de commande de transmission de charge utile (17) destinée à, si l'unité de détermination de volume de charge utile (16) détermine que le volume de charge utile reçu RPS a atteint le volume de charge utile désigné DSPS, fournir une commande de démarrage de la transmission de la charge utile accumulée dans l'unité de stockage (14) vers le second dispositif.

2. Appareil de transmission et de réception de données (10) selon la revendication 1, comprenant en outre un port de réception (11) destiné à recevoir des paquets de la part du premier dispositif.

3. Appareil de transmission et de réception de données (10) selon la revendication 2, dans lequel la vitesse de réception RR des paquets est une vitesse de transmission du port de réception (11).

4. Appareil de transmission et de réception de données (10) selon l'une quelconque des revendications précédentes, comprenant en outre un port de transmission (18) destiné à transmettre des charges utiles accumulées dans l'unité de stockage (14) vers le second dispositif sous la forme de paquets.

5. Appareil de transmission et de réception de données (10) selon la revendication 4, dans lequel la vitesse de transmission TR des paquets est une vitesse de transmission du port de transmission (18).

6. Appareil de transmission et de réception de données (10) selon l'une quelconque des revendications précédentes, dans lequel l'unité de stockage (14) est basée sur un accès direct à la mémoire.

7. Appareil de transmission et de réception de données (10) selon l'une quelconque des revendications précédentes, comprenant en outre une unité de recherche de volume de charge utile (12) destinée à rechercher le volume de charge utile total TP d'un paquet à partir d'un en-tête du paquet.

8. Procédé de transmission et de réception de données consistant à accumuler des paquets reçus de la part d'un premier dispositif et à transmettre les paquets accumulés à un second dispositif avant que tous les paquets appartenant à certaines données aient été reçus de la part du premier dispositif, le procédé de transmission et de réception de données comprenant:
l'accumulation des charges utiles des paquets reçus de la part du premier dispositif dans une unité de stockage (14); **caractérisé en ce qu'**il comprend en outre
le calcul d'un volume de charge utile désigné DSPS sur la base de DSPS=TPx(1-RR/TR), où TP est un volume de charge utile total d'un paquet reçu à un certain moment de la part du premier dispositif, RR est une vitesse de réception des paquets, et TR est une vitesse de transmission des paquets ;
la détermination du fait qu'un volume de charge utile reçu RPS accumulé dans l'unité de stockage (14) ait atteint le volume de charge utile désigné DSPS ; et
le lancement de la transmission de la charge utile accumulée dans l'unité de stockage (14) vers le second dispositif lorsqu'il est déterminé que le volume de charge utile reçu RPS a atteint le volume de charge utile désigné DSPS.

9. Procédé de transmission et de réception de données selon la revendication 8, dans lequel l'unité de stockage (14) est basée sur un accès direct à la mémoire.

10. Procédé de transmission et de réception de données selon la revendication 8 ou 9, comprenant en outre la recherche du volume de charge utile total TP d'un paquet à partir d'un en-tête du paquet.

11. Programme informatique destiné à accumuler des paquets reçus de la part d'un premier dispositif et à transmettre les paquets accumulés à un second dispositif avant que tous les paquets appartenant à certaines données aient été reçus de la part du premier dispositif, le programme informatique étant intégré à un support d'enregistrement lisible par ordinateur et comprenant un moyen de code de programme informatique adapté afin d'effectuer les étapes suivantes lorsque ledit programme est exécuté sur un ordinateur :
accumuler les charges utiles des paquets reçus de la part du premier dispositif dans une unité de stockage (14) ; **caractérisé par le fait que** le programme informatique provoque le fait que l'ordinateur exécute d'autres étapes consistant à
calculer un volume de charge utile désigné DSPS sur la base de DSPS=TPx(1-RR/TR), où TP est un volume de charge utile total d'un paquet reçu à un certain moment de la part du premier dispositif, RR est une vitesse de réception des paquets, et TR est une vitesse de transmission des paquets ;
déterminer si un volume de charge utile reçu RPS accumulé dans l'unité de stockage (14) a atteint le volume de charge utile désigné DSPS ; et
lancer la transmission de la charge utile accumulée dans l'unité de stockage (14) vers le second dispositif lorsqu'il est déterminé que le volume de charge utile RPS a atteint le volume de charge utile désigné DSPS.

12. Programme informatique selon la revendication 11, dans lequel l'unité de stockage (14) est basée sur un accès direct à la mémoire.

13. Programme informatique selon la revendication 11 ou 12, le programme informatique provoquant en outre le fait que l'ordinateur exécute une étape de recherche du volume de charge utile total TP d'un paquet à partir d'un en-tête du paquet.
